# EUROPÄISCHE PATENTSCHRIFT

(11) **EP 2 945 749 B1**
(45) Veröffentlichungstag und Bekanntmachung des Hinweises auf die Patenterteilung: **18.01.2017**
(21) Anmeldenummer: 13762761.8
(22) Anmeldetag: 04.09.2013
(51) Int. Cl.: B02C 15/00, B02C 25/00

(54) **VERFAHREN ZUR ANTRIEBSREGELUNG SOWIE NACH DEM VERFAHREN ARBEITENDE REGELUNGSEINRICHTUNG**
DRIVE REGULATING METHOD AND REGULATING DEVICE WHICH OPERATES ACCORDING TO THE METHOD
PROCÉDÉ DE RÉGLAGE D'ENTRAÎNEMENT AINSI QUE DISPOSITIF DE RÉGLAGE FONCTIONNANT SELON LE PROCÉDÉ

(30) Priorität: 16.01.2013 DE 102013200578
(43) Veröffentlichungstag der Anmeldung: 25.11.2015
(73) Patentinhaber: Siemens Aktiengesellschaft, 80333 München (DE)
(72) Erfinder: KLOTZEK, Andreas, 91052 Erlangen (DE); KUBE, Andreas, 52078 Aachen (DE); PÖTTER, Friedhelm, 59192 Bergkamen (DE)
(86) Internationale Anmeldenummer: PCT/EP2013/068261
(87) Internationale Veröffentlichungsnummer: WO 2014/111177

(56) Entgegenhaltungen:
- EP-A1- 2 492 016
- WO-A1-2008/049545
- DE-A1-102007 033 256

## Beschreibung

Die vorliegende Erfindung betrifft ein Verfahren zur Antriebsregelung, nämlich ein Verfahren zur Antriebsregelung eines Schwerlastantriebs, insbesondere eines Schwerlastantriebs einer zum Zerkleinern spröder Materialien, zum Beispiel Zementrohmaterial, bestimmten Vertikalmühle sowie eine Regelungseinrichtung zur Implementierung des Verfahrens und ein korrespondierendes, nach dem Verfahren arbeitendes Antriebssystem für eine Vertikalmühle, wie beispielsweise aus der DE-10/2007 033 256 bakannt.

Vertikalmühlen der oben genannten Art mit einem um die Vertikale rotierenden Mahlteller sowie Mahlwalzen oberhalb des Mahltellers neigen zu starken mechanischen Schwingungen, denn vereinfacht ausgedrückt handelt es sich bei einer Vertikalmühle um ein schwingfähiges System in Form eines bedämpften Zweimassenschwingers. Zu der ersten Masse gehören der Mahlteller sowie alle mit dem Mahlteller bewegten Einheiten und die zweite Masse ist der Rotor des antreibenden Motors. Die Verbindung zwischen diesen beiden Massen besteht in Form des Antriebsstrangs, also zumindest einem vom Antriebsstrang umfassten Getriebe, der bzw. das in dem schwingfähigen System wie eine Torsionsfeder fungiert. Das System wird durch kontinuierliche, niederfrequente Lastwechsel aus dem Mahlprozess sowie zufällige Wechselbelastungen aus dem Mahlprozess stoßartig, sowie zu kurzzeitigen oder auch länger andauernden Schwingungen angeregt. Die dabei entstehenden Kräfte und Momente können so stark werden, dass der Mahlprozess gestoppt werden muss, um Schäden am Antriebsstrang, nämlich insbesondere am Elektromotor und/oder am Getriebe, oder der Anlage insgesamt zu vermeiden.

Um solche Schwingungen gering zu halten, muss der Betreiber der Mühle bisher die Prozessparameter, also insbesondere einen Anpressdruck der Mahlwalzen, eine Rezeptur des Mahlguts sowie Zugabemengen von Mahlhilfen, so gestalten, dass die Schwingungsanregung unter einem kritischen Niveau bleibt. Dies führt jedoch zu unerwünschten Einschränkungen in der Prozessgestaltung, die sich negativ auf viele Bereiche auswirken. Betroffen sind zum Beispiel das Spektrum von mit dem jeweils erhaltenen Mahlgut herstellbaren Produkten, die Effektivität der Mühle, der erforderliche Energieeinsatz und die Kosteneffizienz.

Vor diesem Hintergrund und aufgrund der wachsenden Anforderungen hinsichtlich Verfügbarkeit, Effizienz sowie der Lebensdauerkosten (Total Cost of Ownership) gewinnt die Auslegung und die Anordnung der elektrischen und mechanischen Komponenten eines Antriebssystems und des jeweiligen Antriebsstrangs eines Schwerlastantriebs, insbesondere einer Vertikalmühle, zunehmend an Bedeutung.

Für Vertikalmühlen stellen derzeit Antriebssysteme mit einem Getriebe und zumindest einem Elektromotor in Form eines Asynchronmotors, vorzugsweise einem Schleifringläufer, sowie zumindest einem den mindestens einen Elektromotor speisenden Frequenzumrichter eine bevorzugte Lösung dar. Hierbei sind die Mühlengetriebe in der Praxis häufig als Varianten von Kegel- oder Stirnrad-Planetengetrieben ausgeführt. Die Aufgabe des Getriebes ist neben der Drehzahl- und Drehmomentwandlung die Aufnahme der axialen Mahlkräfte und deren Weiterleitung in das Fundament.

In der Praxis ist eine Regelung eines solchen Antriebssystems für eine Vertikalmühle im Wesentlichen mit folgenden Problemen konfrontiert:
Um eine optimale Prozessführung gewährleisten zu können, besteht eine erste, scheinbar triviale Aufgabe des Antriebs darin, die vorgegebene Drehzahl des Mahltellers sicherzustellen. Da das am Mahlteller abgeforderte Prozessmoment schwankt, ist eine Drehzahlregelung erforderlich.

Die auf die Antriebsmechanik wirkenden Lastschwankungen und Schwingungsanregungen sind geprägt durch Impulslasten, wie sie sich zum Beispiel ergeben, wenn die Mahlwalzen grobes Mahlgut überrollen, stochastische Lasten des Mahlvorgangs, periodische Anregungen aus der Getriebe- und Mühlenkinematik sowie einen variierenden Anpressdruck der Mahlwalzen. Das Zusammenwirken dieser Belastungseinflüsse führt zu einem komplexen Lastspiel, das sogar Resonanzschwingungen anfachen kann.

Neben den Triebstrangschwingungen kann auch ein instabiles, also zum Beispiel fluidisierendes oder von Welligkeit geprägtes Mahlbett extreme Schwingungszustände der Mühle, insbesondere ein Mühlenrumpeln, verursachen.

Schließlich macht es das Vermahlen von natürlichen Produkten weitgehend unvorhersehbar wie der Mahlprozess einzustellen ist, um einen ruhigen Lauf der Mühle zu garantieren. Daher ist es stets eine Herausforderung für den Operator im Leitstand, die richtigen Prozessparameter zu finden. Letztendlich kann der Antrieb allein einen ungünstig eingestellten Prozess zwar beruhigen, aber nicht korrigieren.

Der hier vorgestellte Ansatz befasst sich mit einer Reduktion der im Betrieb der Vertikalmühle auf den Antriebsstrang wirkenden Belastungen. Bisher hat man versucht, solche Belastungen durch den Einsatz von Kupplungen im Antriebsstrang zu reduzieren. Eine Kupplung ist aber bekanntlich ein teures Verschleißteil und die Wirkungsweise einer Dämpfung von Schwingungen mittels einer Kupplung liegt in der Umwandlung von Schwingungsenergie in Wärme, was sich negativ auf die Energiebilanz der Vertikalmühle auswirkt. Darüber hinaus hat sich aufgrund von Beobachtungen bei in Betrieb befindlichen Vertikalmühlen ergeben, dass die Triebstrangschwingungen auch bei Verwendung einer Kupplung auf einem sehr hohen Niveau bleiben.

Eine Aufgabe der vorliegenden Erfindung besteht entsprechend darin, ein Verfahren zur Antriebsregelung einer Vertikalmühle und eine nach dem Verfahren arbeitende Regelungseinrichtung anzugeben, die solche Triebstrangschwingungen reduziert, insbesondere ein Verfahren und eine korrespondierende Vorrichtung, die solche Triebstrangschwingungen ohne Verwendung einer Kupplung im Antriebsstrang reduziert.

Die oben genannte Aufgabe wird durch ein Verfahren zur Antriebsregelung einer Vertikalmühle mit den Merkmalen des Anspruchs 1 gelöst. Die Aufgabe wird außerdem durch eine Regelungseinrichtung mit den Merkmalen des parallelen Vorrichtungsanspruchs sowie durch eine Vertikalmühle oder ein Antriebssystem einer Vertikalmühle mit einer solchen Regelungseinrichtung gelöst. Die hier und im Folgenden mitunter auch nur kurz als Mühle bezeichnete Vertikalmühle umfasst einen um die Vertikale drehbaren Mahlteller, der durch mindestens einen Elektromotor und einen zumindest ein Getriebe umfassenden Antriebsstrang antreibbar ist und im Betrieb der Mühle angetrieben wird.

Bei dem Verfahren werden eine Istdrehzahl und in Bezug auf den Antriebsstrang ein Triebstrangmoment aufgenommen, erfasst und/oder ermittelt und zusammen mit einer vorgegebenen oder vorgebbaren Solldrehzahl einer Regelungseinrichtung zugeführt. Das Verfahren zeichnet sich dadurch aus, dass die Regelungseinrichtung auf Basis der Istdrehzahl und der Solldrehzahl sowie des Triebstrangmoments ein Ausgangssignal für ein Sollmoment erzeugt. Das Ausgangssignal für das Sollmoment bewirkt, dass das resultierende Sollmoment gleichsinnig mit einem aus dem Mahlprozess resultierenden Moment verringert oder erhöht wird.

Bei einer zur Ausführung eines solchen Verfahrens und eventuell einzelner oder mehrerer im Folgenden beschriebener Ausführungsformen bestimmten Regelungseinrichtung, nämlich einer Regelungseinrichtung zur Antriebsregelung einer Vertikalmühle der oben genannten und im Folgenden beschriebenen Art, sind der Regelungseinrichtung als Eingangsgrößen eine erste und eine zweite Größe, nämlich eine Istdrehzahl und ein in Bezug auf den Antriebsstrang erfasstes Triebstrangmoment, sowie als weitere Eingangsgröße eine vorgegebene oder vorgebbare Solldrehzahl zuführbar. Mittels der Regelungseinrichtung ist auf Basis der Istdrehzahl und der Solldrehzahl sowie des Triebstrangmoments ein Ausgangssignal für ein Sollmoment generierbar. Das Ausgangssignal zeichnet sich dadurch aus, dass das resultierende Sollmoment gleichsinnig mit einem aus dem Mahlprozess resultierenden Moment verringert oder erhöht wird.

Kurz gefasst ist die Erfindung also ein Verfahren sowie eine Vorrichtung zur Antriebsregelung einer Schwerlastanordnung in Form eines Antriebssystems, bei dem die Regelung zusätzlich zur Istdrehzahl des Mahltellers das in Bezug auf den Antriebsstrang erfasste Triebstrangmoment berücksichtigt. Etwaige Schwingungen im Antriebsstrang führen zwar auch zu Änderungen der Drehzahl des Mahltellers (Istdrehzahl) und zu entsprechenden Änderungen der Drehgeschwindigkeit des Mahltellers. Es hat sich aber gezeigt, dass solche Schwingungen besonders gut und vor allem ausreichend schnell anhand des Triebstrangmoments erkennbar sind. Der hier beschriebene Ansatz sieht entsprechend eine Berücksichtigung des in Bezug auf den Antriebsstrang erfassten Triebstrangmoments vor.

Der Vorteil der Erfindung besteht darin, dass durch die gezielte Verringerung oder Erhöhung des antriebsseitigen Sollmoments dynamische Lastspitzen reduziert werden oder reduzierbar sind. Die Anpassung, also Verringerung oder Erhöhung, des Sollmoments erfolgt dabei gleichsinnig mit dem jeweils aus dem Mahlprozess resultierenden Moment. Die Verringerung solcher Lastspitzen bewirkt eine Senkung der Belastung der Triebstrangmechanik. Bisher ist zur Handhabung solcher Lastspitzen aus Sicherheitsgründen stets eine entsprechende Dimensionierung der einzelnen Komponenten des Antriebsstrangs vorgenommen worden. Dies ist jetzt nicht mehr erforderlich, so dass die einzelnen Komponenten des Antriebsstrangs preiswerter, mit geringerem Gewicht und mit verringertem Materialeinsatz herstellbar sind. Dies gilt auch für Sonderlasten, wie zum Beispiel das sogenannte Mühlenrumpeln. Speziell die Notwendigkeit, auch die beim Mühlenrumpeln auftretenden Belastungen aufnehmen zu können, hat bisher zu der oben skizzierten Überdimensionierung der Komponenten des Antriebsstrangs geführt. Auch dies ist auf Basis des hier beschriebenen Ansatzes nicht mehr nötig. Darüber hinaus wird eine bisher ebenfalls stets im Antriebsstrang vorgesehene Kupplung nicht mehr oder nicht mehr zwingend benötigt.

Die Istdrehzahl ist zum Beispiel die momentane Drehzahl einer Welle auf der Ausgangsseite des Getriebes und damit ein Maß für die momentane Drehzahl des Mahltellers. Zur Erfassung einer derartigen Istdrehzahl kommen an sich bekannte Sensoren in Betracht, nämlich zum Beispiel sogenannte Inkrementalgeber. Wenn der Elektromotor mittels eines Frequenzumrichters gespeist und der Frequenzumrichter im sogenannten geberlosen Betrieb betrieben wird, ist eine Erfassung der Istdrehzahl mittels eines Sensors nicht erforderlich. Stattdessen kann die Istdrehzahl direkt beim Frequenzumrichter ausgelesen werden. Ein derartiges Auslesen der Istdrehzahl wird hier und im Folgenden als Aufnahme der Istdrehzahl bezeichnet.

Das in Bezug auf den Antriebsstrang erfasste Triebstrangmoment ist zum Beispiel das im Getriebe wirkende mechanische Moment und wird mit einem ebenfalls an sich bekannten Sensor aufgenommen, nämlich zum Beispiel einem Drehmomentsensor. Alternativ kommt zur Ermittlung des Triebstrangmoments auch in Betracht, eine Differenzlage zweier Triebstrangorte durch Messung des Drehwegs oder einer seiner zeitlichen Ableitungen zu ermitteln, um daraus auf das Triebstrangmoment zu schließen. Als Beispiel für zwei derartige Triebstrangorte kommen zum Beispiel eine Welle auf der Eingangsseite des Getriebes und die Welle auf der Ausgangsseite des Getriebes in Betracht. Eine Differenz zwischen der Rotationslage dieser beiden Wellen ist ein Maß für das Triebstrangmoment. Dementsprechend kann die Erfassung des Triebstrangmoments in Bezug auf den Antriebsstrang auch mittels zweier Inkrementalgeber oder dergleichen und einer geeigneten Verarbeitung der von solchen Sensoren erhaltenen Messwerte erfolgen. Eine weitere Möglichkeit zur Ermittlung des Triebstrangmoments ist dessen Berechnung, auf Basis des dem Frequenzumrichter bekannten und auf die Rotorträgheit wirkenden Luftspaltmoments und der ermittelten Beschleunigung der Rotorträgheit. Eine weitere Möglichkeit zur Ermittlung des Triebstrangmoments, insbesondere seiner Dynamik, ist es, die Veränderung des Triebstrangmoments auf Basis einer nur an einem Triebstrangort, insbesondere dem Mahlteller, ermittelten Drehwinkelkoordinate oder einer ihrer zeitlichen Ableitungen zu antizipieren. Alle diese Möglichkeiten sollen als von der hier und im Folgenden verwendeten Formulierung des Aufnehmens, Erfassens oder Ermittelns umfasst gelten.

Durch die Erfassung des Triebstrangmoments und dessen Berücksichtigung durch die Regelungseinrichtung kann das antriebsseitige Sollmoment gleichsinnig mit dem Triebstrangmoment erhöht oder verringert werden. Zur Veranschaulichung kann dies auch so beschrieben werden, dass bei einem aufgrund des Mahlprozesses resultierenden Moment, das zum Beispiel dem Sollmoment sprungartig verstärkt entgegenwirkt (Gegenmoment) und damit normalerweise zu einer erhöhten Torsion im Antriebsstrang führen würde, diese Torsion und die damit einhergehende Belastung des Antriebsstrangs vermieden oder verringert wird, indem das Sollmoment gleichsinnig mit dem aus dem Mahlprozesses resultierenden Moment verändert wird, in diesem Falle verringert wird. Eine Ursache für das oben beschriebene, verstärkte Gegenmoment ist zum Beispiel das Überrollen von grobem Material auf dem Mahlbett durch die Mahlwalzen.

Das erfasste Triebstrangmoment ist ein Maß für ein aufgrund des Mahlprozesses resultierendes Moment, genauer ein Maß für eine Differenz aus dem in den Triebstrang durch den oder jeden Elektromotor eingeleiteten Sollmoment und dem abtriebsseitig aufgrund des Mahlprozesses in den Triebstrang eingekoppelten Moment. Das Triebstrangmoment ist damit auch ein Maß für eine Torsion des Antriebsstrangs. Bei einem sprungartig erhöhten Gegenmoment, das zu einer momentanen Verringerung der Drehgeschwindigkeit des Mahltellers führt, bewirkt die Regelungseinrichtung eine Verringerung des als Führungsgröße für den oder jeden Elektromotor ausgegebenen Sollmoments (der Antrieb "stemmt" sich dem aus dem Prozess stammenden Gegenmoment dann nicht auch noch entgegen, sondern weicht dem Gegenmoment durch eine momentane Verringerung des Sollmoments aus). Bei einem sprungartig reduzierten Gegenmoment, das zu einer momentanen Erhöhung der Drehgeschwindigkeit des Mahltellers führt, bewirkt die Regelungseinrichtung eine Erhöhung des als Führungsgröße für den oder jeden Elektromotor ausgegebenen Sollmoments. In beiden Fällen wird die sich ohne eine solche gleichsinnige Anpassung des Sollmoments ergebende Torsionsänderung des Antriebsstrangs vermieden oder zumindest reduziert. Dies bewirkt eine Verringerung der mechanischen Belastung im Antriebsstrang und erlaubt es, den Antriebsstrang ohne die bisher übliche Überdimensionierung auszulegen. Die bisher übliche Überdimensionierung ist dabei gerade dafür vorgesehen gewesen, solche aufgrund der bisher hingenommenen Torsionen im Antriebsstrang auftretenden Kräfte aufzunehmen. Diese mit dem aus dem Mahlprozess resultierenden, sprungartig veränderlichen Moment gleichsinnige Verringerung oder Erhöhung des Sollmoments führt zu einer momentanen Änderung der Drehzahl des Motors, sodass diese der sprungartig veränderten Drehzahl des Mahltellers angepasst ist. Die Regelungseinrichtung bewirkt neben der gleichsinnigen Verringerung oder Erhöhung des Sollmoments auch, dass die Drehzahl des Mahltellers konstant oder zumindest im Wesentlichen konstant bleibt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens umfasst die Regelungseinrichtung einen Drehzahlregler und einen Drehmomentregler. Der Drehzahlregler gibt auf Basis der Istdrehzahl und der Solldrehzahl eine erste Stellgröße (Stellgröße des Drehzahlreglers) aus. Der Drehmomentregler wirkt auf den Ausgang des Drehzahlreglers, also auf die vom Drehzahlregler ausgegebene erste Stellgröße. Auf diese Weise wird bei dieser Ausführungsform des Verfahrens die oben beschriebene gleichsinnige Verringerung oder Erhöhung des resultierenden Sollmoments erreicht. Dafür gibt der Drehmomentregler auf Basis des erfassten Triebstrangmoments eine zweite Stellgröße (Stellgröße des Drehmomentreglers) aus. Der zumindest eine Elektromotor wird daraufhin zur gleichsinnigen Verringerung oder Erhöhung des Sollmoments mit dem aus dem Mahlprozess resultierenden Moment auf Basis einer Kombination, insbesondere Addition, der vom Drehzahlregler und vom Drehmomentregler ausgegebenen Stellgrößen angesteuert.

Eine zur Ausführung dieser speziellen Form des Verfahrens bestimmte Regelungseinrichtung umfasst einen Drehzahlregler und einen auf den Ausgang des Drehzahlreglers wirkenden Drehmomentregler. Mittels des Drehzahlreglers ist auf Basis der Istdrehzahl und der Solldrehzahl eine erste Stellgröße und mittels des Drehmomentreglers auf Basis des erfassten Triebstrangmoments eine zweite Stellgröße ausgebbar. Mittels der Regelungseinrichtung ist der zumindest eine Elektromotor zur gleichsinnigen Verringerung oder Erhöhung des Sollmoments mit dem aus dem Mahlprozess resultierenden Moment auf Basis einer Kombination, insbesondere Addition, der vom Drehzahlregler und vom Drehmomentregler ausgegebenen Stellgrößen ansteuerbar.

Die Verwendung eines Drehzahl- sowie eines Drehmomentreglers und die Zusammenfassung, insbesondere Addition, der von diesen beiden Reglern jeweils ausgegebenen Stellgrößen ist demnach ein Beispiel für Mittel zur gleichsinnigen Verringerung oder Erhöhung des Sollmoments für den Elektromotor mit dem aus dem Mahlprozess resultierenden Moment und eine mögliche Ausführungsform zur gleichsinnigen Verringerung oder Erhöhung des Sollmoments für den Elektromotor mit dem aus dem Mahlprozess resultierenden Moment. Die vom Drehzahlregler ausgegebene Stellgröße führt allein zu einem Sollmoment zur Aufrechterhaltung einer weitgehend konstanten Drehzahl des Mahltellers. Die vom Drehmomentregler ausgegebene Stellgröße und deren Überlagerung mit der von dem Drehzahlregler ausgegebenen Stellgröße führt zu einer Anpassung des resultierenden Sollmoments entsprechend dem jeweils erfassten Triebstrangmoment. Diese Anpassung bewirkt zum Beispiel eine Reduktion des Sollmoments, wenn aufgrund des erfassten Triebstrangmoments erkannt wird, dass aufgrund des Mahlprozesses auf den Triebstrang ein erhöhtes Gegenmoment wirkt. Umgekehrt bewirkt diese Anpassung eine Erhöhung des Sollmoments, wenn aufgrund des erfassten Triebstrangmoments erkannt wird, dass aufgrund des veränderlichen Lastmoments aus dem Mahlprozess auf den Triebstrang ein reduziertes Gegenmoment wirkt.

Bei einer speziellen Ausführungsform des Verfahrens zur Antriebsregelung und einer nach dem Verfahren arbeitenden Regelungseinrichtung umfasst der Drehmomentregler einen Hochpassfilter und eine anschließende Filterstufe zur Verstärkung der Dynamik des hochpassgefilterten Triebstrangmoments. Hinsichtlich des Verfahrens werden dabei im Rahmen der Funktionalität des Drehmomentreglers das erfasste Triebstrangmoment hochpassgefiltert und anschließend die Dynamik des resultierenden hochpassgefilterten Triebstrangmoments verstärkt. Die Hochpassfilterung erfolgt mittels des von dem Drehmomentregler umfassten Hochpassfilters oder einer vergleichbaren Funktionalität. Die Verstärkung der Dynamik des hochpassgefilterten Triebstrangmoments erfolgt mittels eines ebenfalls von dem Drehmomentregler umfassten Übertragungsglieds mit differenzierendem Verhalten (D-Glied).

Wenn der oder jeder Elektromotor von einem Frequenzumrichter gespeist wird, kann das resultierende Sollmoment, also die Überlagerung, insbesondere Addition, der beiden innerhalb der Regelungseinrichtung vom Drehzahlregler und vom Drehmomentregler erzeugten Sollmomente dem Frequenzumrichter zugeführt werden, der daraufhin in grundsätzlich an sich bekannter Art und Weise für eine Ansteuerung des oder jedes Elektromotors sorgt, so dass sich das Sollmoment im Antriebsstrang ergibt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Hinzuweisen ist noch darauf, dass der hier beschriebene Ansatz und einzelne und gegebenenfalls kombinierte Ausführungsformen auch mit den in den parallelen, auf denselben Erfinder zurückgehenden Anmeldungen derselben Anmelderin mit dem internen Aktenzeichen der Anmelderin 201312092 und 201312099 (amtliches Aktenzeichen noch nicht bekannt) vorgeschlagenen Ansatz und dort beschriebenen speziellen Ausführungsformen kombinierbar ist. Insoweit wird der vollständige Offenbarungsgehalt dieser parallelen Anmeldungen, speziell im Hinblick auf die dort beschriebene periodische Variation der Drehzahl des Mahltellers sowie die Mustererkennung in einem Messwertverlauf und die Anpassung der Drehzahl des Mahltellers im Falle eines erkannten Musters in die hier vorgelegte Beschreibung einbezogen. Jede derartige Möglichkeit zur Anpassung der Drehzahl des Mahltellers sowie auch beide Möglichkeiten gemeinsam können mit dem hier beschriebenen Verfahren und der nach dem Verfahren arbeitenden Regelungseinrichtung kombiniert werden, zum Beispiel indem das am Ausgang der Regelungseinrichtung ausgegebene Sollmoment zur periodischen Variation der Drehzahl des Mahltellers oder aufgrund eines erkannten Musters angepasst wird. Die in den parallelen Anmeldungen beschriebenen Möglichkeiten zur Anpassung der Drehzahl des Mahltellers sowie auch beide Möglichkeiten gemeinsam können mit dem hier beschriebenen Verfahren und der nach dem Verfahren arbeitenden Regelungseinrichtung auch kombiniert werden, indem der dem Drehzahlregler der Regelungseinrichtung zugeführte Drehzahlsollwert angepasst wird.

Das Ausführungsbeispiel ist nicht als Einschränkung der Erfindung zu verstehen. Vielmehr sind im Rahmen der vorliegenden Offenbarung auch Änderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: eine schematisch stark vereinfachte Darstellung einer Vertikalmühle mit einem mittels eines Schwerlastantriebs angetriebenen Mahlteller,
- FIG 2: die Vertikalmühle als Wirkkette zusammen mit einer zur Antriebsregelung der Vertikalmühle bestimmten Regelungseinrichtung,
- FIG 3: eine Darstellung zur Erläuterung der vektoriellen Richtungen der betrachteten Momente und
- FIG 4: die Regelungseinrichtung mit weiteren Details.

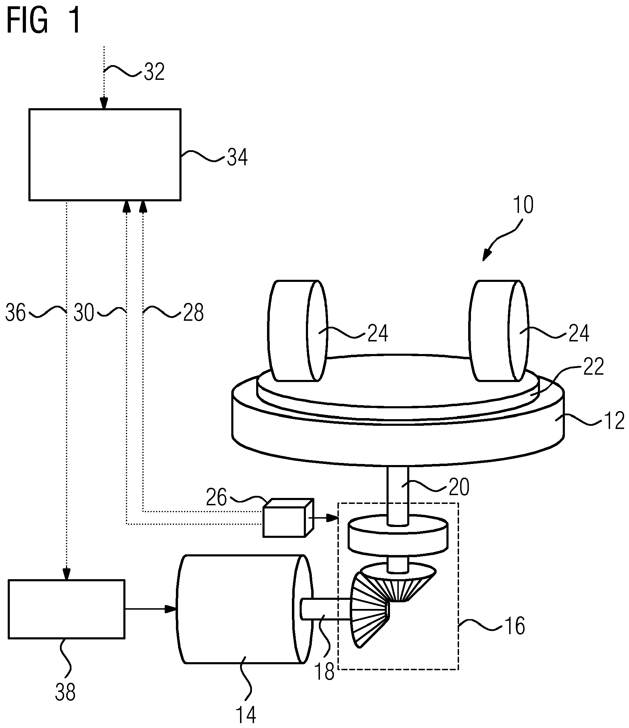

Die Darstellung in FIG 1 zeigt schematisch stark vereinfacht eine Vertikalmühle 10 zum Zerkleinern spröder Materialien, zum Beispiel Zementrohmaterial. Die Vertikalmühle 10 umfasst einen um die Vertikale drehbaren Mahlteller 12. Der Antrieb des Mahltellers 12 erfolgt mittels eines Schwerlastantriebs in Form von zumindest einem Motor, insbesondere zumindest einem Elektromotor 14, und im hier gezeigten Beispiel mittels eines zwischen dem oder jedem Elektromotor 14 und dem Mahlteller 12 befindlichen Getriebes 16. Das Getriebe 16 ist hier ohne Verzicht auf eine weitergehende Allgemeingültigkeit als Kegelradverzahnung mit einem anschließenden, ohne nähere Details dargestellten Planetengetriebe gezeigt. Das Getriebe 16 kann zum Beispiel auch eine Stirnradverzahnung oder dergleichen und/oder ein vorgeschaltetes oder anschließendes Planetengetriebe oder dergleichen umfassen.

Die Vertikalmühle 10 umfasst zumindest eine angetriebene Welle. In der Darstellung in FIG 1 umfasst die Vertikalmühle 10 als antriebsseitige Welle eine Motorwelle 18 und als abtriebsseitige Welle eine Mahltellerwelle 20. Sämtliche Mittel zur Übertragung der Antriebskraft des Elektromotors 14 auf den Mahlteller 12 werden als Antriebsstrang bezeichnet. Hier gehören zum Antriebsstrang zumindest das Getriebe 16 und die Mahltellerwelle 20.

Im Betrieb der Vertikalmühle 10 versetzt der oder jeder Elektromotor 14 den Mahlteller 12 mittels des Antriebsstrangs in Rotation. Auf dem Mahlteller 12 befindet sich als Resultat des Mahlvorgangs sowie als Resultat von zugeführten, zu mahlenden und vermahlenen Stoffen ein Mahlbett 22, also eine Mischung von gemahlenem und zu mahlendem Gut. Der Mahleffekt wird erreicht, indem eine Mahlwalze 24 oder mehrere Mahlwalzen 24 einerseits aufgrund ihres Gewichts, aber andererseits gegebenfalls auch aufgrund zusätzlich aufgebrachter Kräfte, die zum Beispiel mittels eines an einer schwenkbeweglich gelagerten Mahlwalze 24 angreifenden Hydraulikzylinders oder dergleichen aufgebracht werden, auf das Mahlbett 22 und den rotierenden Mahlteller 12 gepresst werden.

Die Vertikalmühle 10 ist insgesamt ein schwingfähiges System und speziell neigt die Vertikalmühle 10 zu starken mechanischen Torsionsschwingungen im Antriebsstrang. Die dabei entstehenden Kräfte und Momente können so stark werden, dass die mechanischen Bauteile des Antriebsstrangs, also zum Beispiel das Getriebe 16, extrem beansprucht oder überbeansprucht werden.

Solchen Torsionsschwingungen hat man bisher mittels einer Kupplung oder dergleichen, zum Beispiel einer hochelastischen Elastomerkupplung, zu begegnen versucht. Eine derartige Kupplung ist zum Beispiel zwischen dem Getriebe 16 und dem Mahlteller 12 angeordnet (nicht gezeigt). Eine solche Kupplung kann Schwingungen in der Drehgeschwindigkeit des Mahltellers 12 zwar nicht ausgleichen, verhindert oder reduziert aber eine Übertragung solcher Schwingungen in das Getriebe 16 und den Elektromotor 14.

Hier wird vorgeschlagen, dass zum Beispiel mittels einer dem Antriebsstrang mittelbar oder unmittelbar zugeordneten Sensorik 26 schwingungsrelevante Werte erfasst werden, nämlich zumindest ein Wert oder Messwert zu einer momentanen Drehzahl eines rotierenden Teils des Getriebes 16 oder des Mahltellers 12 sowie zumindest ein Messwert zu einem im Antriebsstrang wirkenden mechanischen Moment. Der erfasste Momentenmesswert ist dabei ein Maß für das mittels des Getriebes 16 übertragene Moment oder Getriebemoment, also ein Maß für ein Moment, das zur Unterscheidung von einem auf den Elektromotor 14 wirkenden elektrischen Moment als das im Antriebsstrang, insbesondere im Getriebe 16, mechanisch wirksame Moment bezeichnet wird. Der erfasste Drehzahlmesswert und der erfasste Messwert zu dem mechanischen Moment werden im Folgenden als Istdrehzahl 28 bzw. Triebstrangmoment 30 bezeichnet. Die beiden erfassten oder aufgenommenen Werte oder Messwerte 28, 30 werden zusammen mit einer Solldrehzahl 32 einer Regelungseinrichtung 34 zugeführt. Die Regelungseinrichtung 34 erzeugt ein Ausgangssignal 36 für ein Sollmoment, das einem Frequenzumrichter 38 zur entsprechenden Ansteuerung des oder jedes Elektromotors 14 zugeführt wird. Aufgrund dieser Ansteuerung erzeugt der oder jeder Elektromotor 14 im Betrieb der Vertikalmühle 10 das mit dem Ausgangssignal 36 angeforderte Sollmoment. Wenn ein Frequenzumrichter 38 zur Speisung des oder jedes Elektromotors 14 verwendet wird und der Frequenzumrichter 38 in einer speziellen Betriebsart, nämlich dem sogenannten geberlosen Betrieb, betrieben wird, kann die momentane Drehzahl auch in an sich bekannter Art aus einem Speicher des Frequenzumrichters 38 ausgelesen werden. Eine auf diese Weise aufgenommene Istdrehzahl 28 ist kein Messwert, sondern wird im Frequenzumrichter 38 im Zuge der Speisung des oder jedes Elektromotors 14 gebildet. Entsprechend wird zur Unterscheidung von einer durch Messung erfassten Istdrehzahl 28 ein Erhalt der Istdrehzahl 28 auf dieser Basis als Aufnahme der Istdrehzahl 28 bezeichnet.

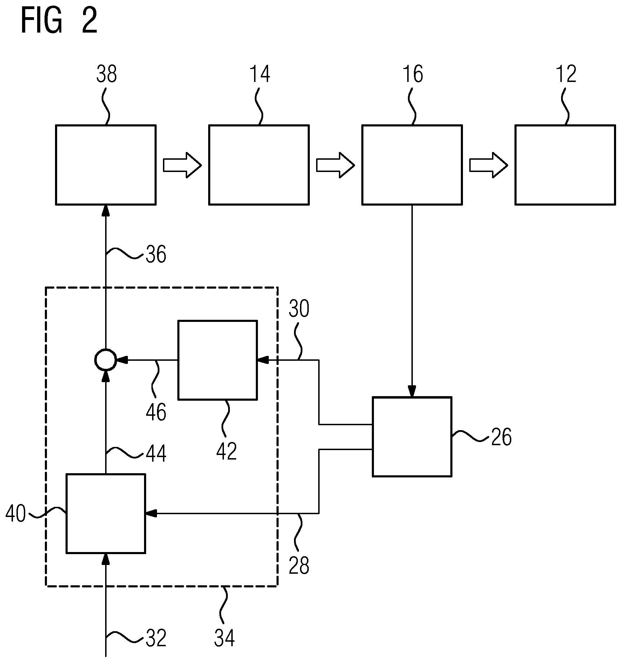

Die Darstellung in FIG 2 zeigt einzelne Elemente der Vertikalmühle 10 als Wirkkette sowie die Regelungseinrichtung 34 mit weiteren Details. Danach umfasst die Regelungseinrichtung 34 einen Drehzahlregler 40 und einen Drehmomentregler 42. Der Regelungseinrichtung 34 werden als Eingangsgrößen die Istdrehzahl 28 und das Triebstrangmoment 30 sowie als weitere Eingangsgröße eine vorgegebene oder vorgebbare Solldrehzahl 32 zugeführt. Mittels des Drehzahlreglers 40 wird auf Basis der Istdrehzahl 28 und der Solldrehzahl 32 eine erste Stellgröße 44 ausgegeben, die zur Unterscheidung als Stellgröße des Drehzahlreglers 40 bezeichnet wird. Der Drehmomentregler 42 wirkt auf den Ausgang des Drehzahlreglers 40, derart, dass sich der Ausgang des Drehzahlreglers 40, also die erste Stellgröße 44, und eine am Ausgang des Drehmomentreglers 42 ausgegebene zweite Stellgröße 46 überlagern. Die Überlagerung erfolgt dabei zum Beispiel, indem die beiden Stellgrößen 44, 46 addiert werden. Die vom Drehmomentregler 42 ausgegebene zweite Stellgröße 46 ergibt sich auf Basis des erfassten Triebstrangmoments 30, das dem Drehmomentregler 42 an dessen Eingang zugeführt wird. Die vom Drehmomentregler 42 ausgegebene zweite Stellgröße 46 wird zur Unterscheidung auch als Stellgröße des Drehmomentreglers 42 bezeichnet. Die Stellgröße 44 des Drehzahlreglers 40 und die Stellgröße 46 des Drehmomentreglers 42 sind ein Maß für ein erstes und ein zweites Sollmoment für den oder jeden Elektromotor 14. Der oder jeder Elektromotor 14 wird zum Antrieb des Mahltellers 12 mittels der Regelungseinrichtung 34 auf Basis einer Überlagerung, insbesondere Addition, der beiden Stellgrößen 44, 46 und des resultierenden Ausgangssignals 36 angesteuert.

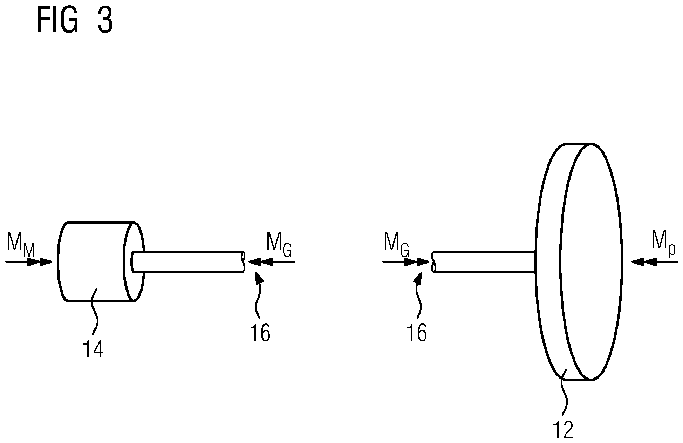

Zur Veranschaulichung zeigt die schematisch vereinfachte Darstellung in FIG 3 die bei dem hier beschriebenen Ansatz betrachteten Momente in der Vertikalmühle 10. Dargestellt sind auf der linken Seite das antriebsseitige Teilsystem mit dem Elektromotor 14 und auf der rechten Seite das abtriebsseitige Teilsystem mit dem Mahlteller 12. Beide Teilsysteme sind durch das Getriebe 16 gekoppelt. Aufgrund der Vorgabe des Sollmoments bringt der oder jeder Elektromotor 14 ein Motormoment M_{M} auf. Im Antriebsstrang wirkt das Triebstrangmoment 30, das hier als im Getriebe 16 wirkendes Getriebemoment M_{G} eingezeichnet ist. Aufgrund des veränderlichen Lastmoments aus dem Mahlprozess wirkt über den Mahlteller 12 ein Prozessmoment M_{P} auf den Triebstrang. Wenn sich das Prozessmoment M_{P} sprungartig verringert, führt dies zu einer Beschleunigung des Mahltellers, einhergehend mit einer Triebstrang-Entspannung, also Momentenänderung des Triebstrangmoments M_{T}. Um dieser Momentendynamik entgegen zu wirken, erfolgt eine Erhöhung des Sollmoments und damit eine Erhöhung des Motormoments M_{M}, so dass der Rotor des Motors gleichsinnig beschleunigt und eine Torsionsänderung des Antriebsstrangs vermieden wird. Dies wird als eine mit dem aus dem Mahlprozess resultierenden Moment gleichsinnige Änderung des Sollmoments bezeichnet. Grundlage hierfür ist eine gleichsinnige Änderung des Ausgangssignals 36 für das Sollmoment. Wenn sich das Prozessmoment M_{P} sprungartig erhöht, zum Beispiel weil eine der Mahlwalzen 24 einen größeren Materialbrocken überrollt, führt dies zu einer Verringerung des Sollmoments und damit zu einer Verringerung des Motormoments M_{M}, so dass ein Anstieg der Torsionen im Antriebsstrang vermieden wird. Dies entspricht ebenso einer mit der aus dem Mahlprozess resultierenden Momentenänderung gleichsinnigen Änderung des Ausgangssignals 36 für das Sollmoment.

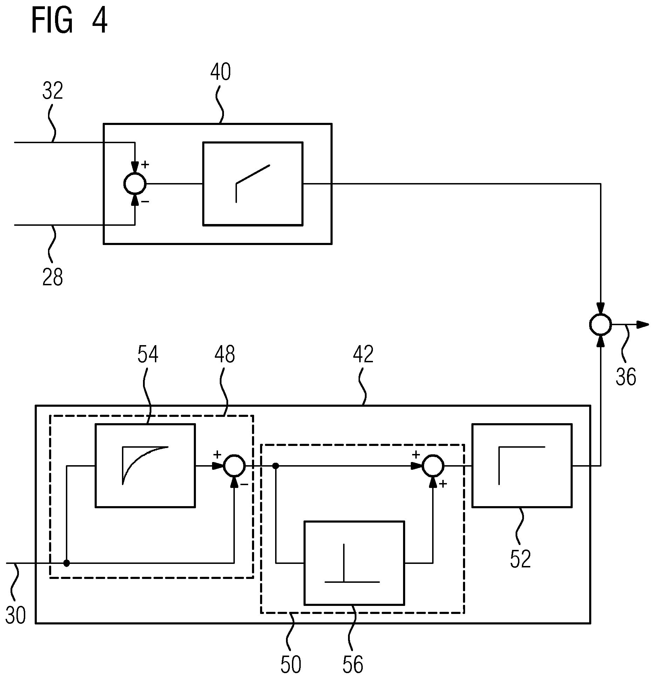

Die Darstellung in FIG 4 zeigt die Regelungseinrichtung 34 mit nochmals weiteren Details. Danach ist der Drehzahlregler 40 zum Beispiel als PI-Regler realisiert. Der Drehmomentregler 42 umfasst einen ersten, als Hochpass fungierenden Abschnitt (Hochpassfilter 48), einen zweiten, mittleren Abschnitt, in dem die Dynamik des resultierenden hochpassgefilterten Triebstrangmoments verstärkt wird (Filterstufe 50), und einen abschließenden, dritten Abschnitt mit einem Proportionalglied (P-Glied 52).

Bei der dargestellten Ausführungsform wird der Hochpassfilter 48 mittels eines Tiefpassfilters 54 realisiert, von dessen Ausgang das ungefilterte Triebstrangmoment 30 subtrahiert wird. Die Filterstufe 50 umfasst ein Übertragungsglied mit differenzierendem Verhalten (D-Glied 56), dessen Ausgang die Änderungsgeschwindigkeit des Triebstrangmoments darstellt. Indem das hochpassgefilterte Triebstrangmoment und der Ausgang des D-Glieds 56 addiert werden, ergibt sich die beabsichtigte Verstärkung der Dynamik des hochpassgefilterten Triebstrangmoments. Als letzte Funktionseinheit umfasst der Drehzahlregler 42 als P-Glied 52 ein Übertragungsglied mit proportionalem Verhalten und an dessen Ausgang ergibt sich das Sollmoment des Drehmomentreglers 42.

Alle genannten Funktionsabschnitte des Drehmomentreglers 42 sind für sich genommen optional. Dies drückt sich dadurch aus, dass das Tiefpassfilter 54, das D-Glied 56 und das P-Glied 52 einzeln parametrierbar sind. Wenn zum Beispiel der Verstärkungsfaktor des P-Glieds 52 zu "1" gewählt wird, so könnte das P-Glieds 52 stattdessen auch vollständig entfallen, wodurch der Freiheitsgrad der Parametrierung aufgegeben wird, denn eine Verstärkung des dem P-Glied 52 an dessen Eingang zugeführten Signals findet dann nicht mehr statt. Durch entsprechende Wahl der Parameter des Tiefpassfilters 54 und des D-Glieds 56 können diese deaktiviert werden.

Bei der Inbetriebnahme der Vertikalmühle 10 werden für die einzelnen Funktionsabschnitte des Drehmomentreglers 42 passende Parameter eingestellt. Wenn der Drehmomentregler 42 zum Beispiel kein D-Glied 56 umfasst, berücksichtigt der Drehmomentregler 42 die Änderungsgeschwindigkeit des Triebstrangmoments 30 nicht in dem Maße, wie dies bei einer Ausführungsform, bei welcher der Drehmomentregler 42 ein solches D-Glied 56 umfasst, möglich ist. Dies ändert nichts an der Tatsache, dass bei dem hier beschriebenen Verfahren zur Antriebsregelung der Vertikalmühle 10 und der korrespondierenden Regelungseinrichtung 34 zur Ausführung des Verfahrens auch ein Drehmomentregler 42 zum Einsatz kommen kann, der die beschriebene Filterstufe 50 und entsprechend das dortige D-Glied 56 nicht umfasst. Gleiches gilt entsprechend für den ersten und dritten Abschnitt des Drehmomentreglers 42 mit dem dortigen Tiefpassfilter 54 bzw. dem P-Glied 52.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur Antriebsregelung einer Vertikalmühle 10 mit einem um die Vertikale rotierbaren Mahlteller 12, sowie eine zur Ausführung des Verfahrens bestimmte Regelungseinrichtung 34, wobei beim Betrieb der Vertikalmühle 10 der Mahlteller 12 durch zumindest einen Elektromotor 14 und einen zumindest ein Getriebe 16 umfassenden Antriebsstrang angetrieben wird. Als Eingangsgrößen werden der Regelungseinrichtung 34 eine Istdrehzahl 28 und ein in Bezug auf den Antriebsstrang ermitteltes Triebstrangmoment 30 sowie eine vorgegebene oder vorgebbare Solldrehzahl 32 zugeführt. Die Regelungseinrichtung 34 fungiert als Mittel zur Verringerung oder Erhöhung des Sollmoments des Elektromotors 14. Die Verringerung oder Erhöhung des Sollmoments erfolgt dabei gleichsinnig mit einem aus dem Mahlprozess resultierenden Moment. Dazu erzeugt die Regelungseinrichtung 34 auf Basis der Istdrehzahl 28 und der Solldrehzahl 32 sowie des Triebstrangmoments 30 ein Ausgangssignal 36 für ein Sollmoment. Dieses bewirkt, dass das resultierende Sollmoment gleichsinnig mit einem aus dem Mahlprozess resultierenden Moment verringert oder erhöht wird. Auf Basis des Ausgangssignals 36 erfolgt die Ansteuerung des zumindest einen Elektromotors 14.

## Patentansprüche

1. Verfahren zur Antriebsregelung einer Vertikalmühle (10) mit einem um die Vertikale rotierbaren Mahlteller (12), wobei der Mahlteller (12) durch zumindest einen Elektromotor (14) und einen zumindest ein Getriebe (16) umfassenden Antriebsstrang antreibbar ist,
- wobei eine Istdrehzahl (28) und in Bezug auf den Antriebsstrang ein Triebstrangmoment (30) oder dessen Dynamik aufgenommen, erfasst und/oder und zusammen mit einer vorgegebenen oder vorgebbaren Solldrehzahl (32) einer Regelungseinrichtung (34) zugeführt werden,
- wobei die Regelungseinrichtung (34) auf Basis der Istdrehzahl (28) und der Solldrehzahl (32) sowie des Triebstrangmoments (30) oder dessen Dynamik ein Ausgangssignal (36) für ein Sollmoment erzeugt, derart, dass das resultierende Sollmoment gleichsinnig mit einem aus dem Mahlprozess resultierenden Moment verringert oder erhöht wird.

2. Verfahren nach Anspruch 1,
- wobei die Regelungseinrichtung (34) einen Drehzahlregler (40) umfasst, der auf Basis der Istdrehzahl (28) und der Solldrehzahl (32) eine erste Stellgröße (44) ausgibt und
- wobei die Regelungseinrichtung (34) einen auf den Ausgang des Drehzahlreglers (40) wirkenden Drehmomentregler (42) umfasst, der auf Basis des erfassten Triebstrangmoments (30) eine zweite Stellgröße (46) ausgibt,
- wobei der zumindest eine Elektromotor (14) zur gleichsinnigen Verringerung oder Erhöhung des Sollmoments mit dem aus dem Mahlprozess resultierenden Moment auf Basis einer Addition der vom Drehzahlregler (40) und vom Drehmomentregler (42) ausgegebenen Stellgrößen (44, 46) angesteuert wird.

3. Verfahren nach Anspruch 2,
wobei im Rahmen der Funktionalität des Drehmomentreglers (42) das erfasste Triebstrangmoment (30) hochpassgefiltert und anschließend die Dynamik des resultierenden hochpassgefilterten Triebstrangmoments verstärkt wird.

4. Verfahren nach Anspruch 1, 2 oder 3, wobei das in Bezug auf den Antriebsstrang erfasste Triebstrangmoment (30) auf Basis einer Differenzlage zweier Triebstrangorte ermittelt wird.

5. Regelungseinrichtung (34) zur Antriebsregelung einer Vertikalmühle (10), wobei die Vertikalmühle (10) einen um die Vertikale rotierbaren Mahlteller (12) umfasst und wobei der Mahlteller (12) durch zumindest einen Elektromotor (14) und einen zumindest ein Getriebe (16) umfassenden Antriebsstrang antreibbar ist,
- wobei der Regelungseinrichtung (34) als Eingangsgrößen eine Istdrehzahl (28) und ein in Bezug auf den Antriebsstrang erfasstes Triebstrangmoment (30) zuführbar sind,
- wobei der Regelungseinrichtung (34) als weitere Eingangsgröße eine vorgegebene oder vorgebbare Solldrehzahl (32) zuführbar ist,
- wobei mittels der Regelungseinrichtung (34) auf Basis der Istdrehzahl (28) und der Solldrehzahl (32) sowie des Triebstrangmoments (30) ein Ausgangssignal (36) für ein Sollmoment generierbar ist, derart, dass das resultierende Sollmoment gleichsinnig mit einem aus dem Mahlprozess resultierenden Moment verringert oder erhöht wird.

6. Regelungseinrichtung (34) nach Anspruch 5,
- mit einem Drehzahlregler (40) und einem auf einen Ausgang des Drehzahlreglers (40) wirkenden Drehmomentregler (42),
- wobei mittels des Drehzahlreglers (40) auf Basis der Istdrehzahl (28) und der Solldrehzahl (32) eine erste Stellgröße (44) und mittels des Drehmomentreglers (42) auf Basis des erfassten Triebstrangmoments (30) eine zweite Stellgröße (46) ausgebbar ist,
- wobei der zumindest eine Elektromotor (14) mittels der Regelungseinrichtung (34) zur gleichsinnigen Verringerung oder Erhöhung des Sollmoments mit dem aus dem Mahlprozess resultierenden Moment auf Basis einer Addition der vom Drehzahlregler (40) und vom Drehmomentregler (42) ausgegebenen Stellgrößen (44, 46) ansteuerbar ist.

7. Regelungseinrichtung (34) nach Anspruch 6,
wobei der Drehmomentregler (42) einen Hochpassfilter (48) sowie als Mittel zur Verstärkung einer Dynamik des hochpassgefilterten Triebstrangmoments (30) eine anschließende Filterstufe (50) umfasst.

8. Vertikalmühle (10) mit einer Regelungseinrichtung (34) nach einem der Ansprüche 5, 6 oder 7.

## Claims

1. Method for regulating the drive of a vertical mill (10) with a grinding plate (12) which can be rotated about the vertical, the grinding plate (12) being able to be driven by at least one electric motor (14) and a drivetrain comprising at least one transmission (16),
- wherein an actual rotational speed (28) and in respect of the drivetrain a drivetrain torque (30) or its dynamic are recorded, detected and/or determined and supplied to a regulating device (34) together with a prespecified or prespecifiable target rotational speed (32),
- wherein the regulating device (34) generates an output signal (36) for a target torque based on the actual rotational speed (28) and the target rotational speed (32) as well as the drivetrain torque (30) or its dynamic in such a manner that the resulting target torque is reduced or increased in the same direction as a torque resulting from the grinding process.

2. Method according to claim 1,
- wherein the regulating device (34) comprises a rotational speed regulator (40), which outputs a first controlled variable (44) based on the actual rotational speed (28) and the target rotational speed (32) and
- wherein the regulating device (34) comprises a torque regulator (42), which acts on the output of the rotational speed regulator (40) and outputs a second controlled variable (46) based on the detected drivetrain torque (30),
- wherein the at least one electric motor (14) is activated to reduce or increase the target torque in the same direction as the torque resulting from the grinding process based on an addition of the controlled variables (44, 46) output by the rotational speed regulator (40) and the torque regulator (42).

3. Method according to claim 2,
- wherein the detected drivetrain torque (30) is highpass filtered and the dynamic of the resulting highpass filtered drivetrain torque is then amplified in the context of the functionality of the torque regulator (42).

4. Method according to claim 1, 2 or 3, wherein the drivetrain torque (30) detected in respect of the drivetrain is determined based on the difference between the positions of two drivetrain locations.

5. Regulating device (34) for regulating the drive of a vertical mill (10), the vertical mill (10) comprising a grinding plate (12) which can be rotated about the vertical, and the grinding plate (12) being able to be driven by at least one electric motor (14) and a drivetrain comprising at least one transmission (16),
- wherein an actual rotational speed (28) and a drivetrain torque (30) detected in respect of the drivetrain can be supplied to the regulating device (34) as input variables,
- wherein a prespecified or prespecifiable target rotational speed (32) can be supplied to the regulating device (34) as a further input variable,
- wherein an output signal (36) for a target torque can be generated by means of the regulating device (34) based on the actual rotational speed (28) and the target rotational speed (32) as well as the drivetrain torque (30) in such a manner that the resulting target torque is reduced or increased in the same direction as a torque resulting from the grinding process.

6. Regulating device (34) according to claim 5,
- with a rotational speed regulator (40) and a torque regulator (42) acting on an output of the rotational speed regulator (40),
- wherein a first controlled variable (44) can be output by means of the rotational speed regulator (40) based on the actual rotational speed (28) and the target rotational speed (32) and a second controlled variable (46) can be output by means of the torque regulator (42) based on the detected drivetrain torque (30),
- wherein the at least one electric motor (14) can be activated by means of the regulating device (34) to reduce or increase the target torque in the same direction as the torque resulting from the grinding process based on an addition of the controlled variables (44, 46) output by the rotational speed regulator (40) and the torque regulator (42).

7. Regulating device (34) according to claim 6,
wherein the torque regulator (42) comprises a highpass filter (48) and an adjoining filter stage (50) as means for amplifying a dynamic of the highpass filtered drivetrain torque (30).

8. Vertical mill (10) with a regulating device (34) according to one of claims 5, 6 or 7.

## Revendications

1. Procédé de régulation de l'entraînement d'un broyeur ( 10 ) vertical ayant un plateau ( 12 ) de broyage tournant autour de la verticale, le plateau ( 12 ) de broyage pouvant être entraîné par au moins un moteur ( 14 ) électrique et par une chaîne cinématique comprenant au moins une transmission ( 16 ),
- dans lequel on enregistre une vitesse ( 28 ) de rotation réelle et, en relation à la chaîne cinématique, un couple ( 30 ) ou sa dynamique et/ou et ensemble avec une vitesse ( 32 ) de rotation de consigne donnée à l'avance ou pouvant l'être, on les envoie à un dispositif ( 34 ) de régulation,
- le dispositif ( 34 ) de régulation produisant, sur la base de la vitesse ( 28 ) de rotation réelle et de la vitesse ( 32 ) de rotation de consigne ainsi que du couple ( 30 ) de la chaîne cinématique ou de sa dynamique, un signal ( 36 ) de sortie pour un couple de consigne, de manière à diminuer ou augmenter le couple de consigne résultant dans le même sens qu'un couple résultant du processus de broyage.

2. Procédé suivant la revendication 1,
- dans lequel le dispositif ( 34 ) de régulation comprend un régleur ( 40 ) de vitesse de rotation qui, sur la base de la vitesse ( 28 ) de rotation réelle et de la vitesse ( 32 ) de rotation de consigne, émet une première grandeur ( 44 ) de réglage et
- dans lequel le dispositif ( 34 ) de régulation comprend un régleur ( 42 ) de couple de rotation agissant sur la sortie du régleur ( 40 ) de vitesse de rotation et émettant, sur la base du couple ( 30 ) détecté de la chaîne cinématique, une deuxième grandeur ( 46 ) de réglage,
- dans lequel on commande le au moins un moteur ( 14 ) électrique pour diminuer ou augmenter dans le même sens que le couple résultant du processus de broyage, sur la base d'une addition des grandeurs ( 44, 46 ) de réglage émises par le régleur ( 40 ) de vitesse de rotation et par le régleur ( 42 ) de couple de rotation.

3. Procédé suivant la revendication 2,
dans lequel, dans le cadre de la fonctionnalité du régleur ( 42 ) de couple de rotation, on filtre passe-haut le couple ( 30 ) détecté de la chaîne cinématique et on amplifie ensuite la dynamique du couple de la chaîne cinématique résultant ayant subi le filtrage passe-haut.

4. Procédé suivant les revendications 1, 2 ou 3,
dans lequel on détermine le couple ( 30 ) détecté rapporté à la chaîne cinématique sur la base d'une différence de position de deux emplacements de la chaîne cinématique.

5. Dispositif ( 34 ) de régulation de l'entraînement d'un broyeur ( 10 ) vertical, le broyeur ( 10 ) vertical comprenant un plateau ( 12 ) de broyage tournant autour de la verticale, et le plateau ( 12 ) de broyage pouvant être entraîné par au moins un moteur ( 14 ) électrique et par une chaîne cinématique comprenant au moins une transmission ( 16 ),
- une vitesse ( 28 ) de rotation réelle et un couple ( 30 ) de chaîne cinématique détecté rapporté à la chaîne cinématique pouvant être envoyés comme grandeurs d'entrée au dispositif ( 34 ) de régulation,
- une vitesse ( 32 ) de rotation de consigne, donnée à l'avance ou pouvant l'être, pouvant être envoyée comme autre grandeur d'entrée au dispositif ( 34 ) de régulation,
- dans lequel, au moyen du dispositif ( 34 ) de régulation, on peut créer sur la base de la vitesse ( 28 ) de rotation réelle et de la vitesse ( 32 ) de rotation de consigne ainsi que du couple ( 30 ) de la chaîne cinématique, un signal ( 36 ) de sortie pour un couple de consigne, de manière à augmenter ou diminuer le couple de consigne résultant dans le même sens qu'un couple résultant du processus de broyage.

6. Dispositif ( 34 ) de régulation suivant la revendication 5,
- comprenant un régleur ( 40 ) de vitesse de rotation et un régleur ( 42 ) de couple de rotation agissant sur une sortie du régleur ( 40 ) de vitesse de rotation,
- dans lequel, au moyen du régleur ( 40 ) de vitesse de rotation, sur la base de la vitesse ( 28 ) de rotation réelle et de la vitesse ( 32 ) de rotation de consigne, une première grandeur ( 44 ) de réglage peut être émise, et au moyen du régleur ( 42 ) de couple de rotation, sur la base du couple ( 30 ) détecté de la chaîne cinématique, une deuxième grandeur ( 46 ) de réglage peut être émise,
- dans lequel le au moins un moteur ( 14 ) électrique peut, au moyen du dispositif ( 34 ) de régulation, être commandé pour diminuer ou augmenter le couple de consigne dans le même sens que le couple résultant du processus de broyage, sur la base d'une addition des grandeurs ( 44, 46 ) de réglage émises par le régleur ( 40 ) de vitesse de rotation et par le régleur ( 42 ) de couple de rotation.

7. Procédé ( 34 ) de régulation suivant la revendication 6, dans lequel le régleur ( 42 ) de couple de rotation comprend un filtre ( 48 ) passe-haut ainsi que, comme moyen d'amplification d'une dynamique du couple ( 30 ) de la chaîne cinématique ayant subi un filtrage passe-haut, un étage ( 50 ) de filtrage venant ensuite.

8. Broyeur ( 10 ) vertical ayant un dispositif ( 34 ) de régulation suivant l'une des revendications 5, 6 ou 7.
